# EUROPEAN PATENT SPECIFICATION

(11) **EP 3 437 919 B1**
(45) Date of publication and mention of the grant of the patent: **22.01.2020**
(21) Application number: 18187230.0
(22) Date of filing: 03.08.2018
(51) Int. Cl.: B60N 2/28

(54) **A SAFETY CHAIR COMPRISING AN ANTI-RETURN MECHANISM**
SICHERHEITSSITZVORRICHTUNG MIT EINEM RÜCKLAUFSICHERUNGSMECHANISMUS
SIÈGE DE SÉCURITÉ COMPRENANT UN MÉCANISME ANTI-RETOUR

(30) Priority: 03.08.2017 CN 201720968280 U
(43) Date of publication of application: 06.02.2019
(73) Proprietor: Ningbo Baby First Baby Products Co., Ltd., Yuyao, Zhejiang (CN)
(72) Inventor: XU, Lihong, NINGBO, Zhejiang (CN); LIU, Jianchun, NINGBO, Zhejiang (CN); TANG, Xiaobin, NINGBO, Zhejiang (CN)
(74) Representative: Ipside

(56) References cited:
- EP-A1- 1 900 567
- EP-A2- 2 551 150
- US-A1- 2016 200 225

## Description

### Technical Field

The invention relates to the field of child safety chair, particularly a safety chair with an ISOFIX anti-return mechanism.

### Background of the Invention

ISOFIX is a new standard for mounting child chairs in cars, whose role is to make the installation of child chairs quicker and easier, and rigid coupling is safer. In the prior art, ISOFIX device can be slidably disposed under child chair, like e.g. disclosed in the patent application US 2016/0200225 A1. During installation, the ISOFIX device is pulled out from the underside of child chair and connected to interfaces on car seat, and then the ISOFIX device is activated to retract by retracting mechanism, so that child chair is in close contact with car backrest. However, the above-mentioned ISOFIX device has the following deficiency during utilisation: when ISOFIX connector is pulled out and connected to interfaces on car, ISOFIX connector easily retracts, which results in that the ISOFIX connector cannot be smoothly connected to interfaces.

### Summary of the Invention

The objective of the invention is to provide a safety chair with an ISOFIX anti-return mechanism as defined by the technical features set forth in claim 1.

The objective of the invention is achieved by the following technical solution:
A safety chair with an ISOFIX anti-return mechanism comprises a base, a seat part and an ISOFIX connector, wherein the base and the seat part are separably connected, and the ISOFIX connector is slidably disposed on the base. The safety chair further comprises an anti-return assembly unit which is rotatably mounted in the base, and an elastic element is mounted between the anti-return assembly unit and the base. One end of the anti-return assembly unit extends towards the seat part to form a seat end and the other end extends towards the ISOFIX connector to form a connector end, so as to make the anti-return assembly unit rotate between an anti-return position and a non anti-return position by means of the self-weight of the seat part and the effect of the elastic element. When the anti-return assembly unit rotates to the anti-return position, the connector end rests against back end of the ISOFIX connector which thus cannot retract.

Further, front end of the ISOFIX connector is adapted to be connected to a socket of a car seat. The back end of the ISOFIX connector is provided with a shift rod which can move up and down, and the shift rod is held in an upper position by the elastic element, so that the connector end of the anti-return assembly unit can rest against back end of the shift rod after that the ISOFIX connector is pulled out from the base. The safety chair further comprises a belt. One end of the belt is connected to the shift rod and the other end of the belt extends outside the base. By applying on the belt a pulling force in downward and outward direction, the shift rod moves downwards to a position where the shift rod doesn't interfere with the anti-return assembly unit in the process of pulling the ISOFIX connector out of the base, which allows the ISOFIX connector and the shift rod to move smoothly to the front of the anti-return assembly unit.

Further, the ISOFIX connector is provided with a belt pressing rod in front of the shift rod. The belt is adapted to pass through under the belt pressing rod to extend outside the base, so that the belt is lower at position of the belt pressing rod than at position of the shift rod.

Further, two sides of the back end of the ISOFIX connector respectively comprises a guide rail. Two ends of the shift rod are movably disposed in the guide rail, and the shift rod is held at upper end of the guide rail by the elastic element.

Further, the anti-return assembly unit comprises an anti-return rotating block and an anti-return rod. The anti-return rotating block is rotatably mounted on the underside of the base by a rotating shaft. One end of the anti-return rotating block extends towards the seat part to form a seat end and the other end of the anti-return rotating block forms an anti-return rod mounting slot. The anti-return rod is a U-shaped rod, and the middle portion of the anti-return rod is rotatably disposed in the anti-return rod mounting slot, and two ends of the anti-return rod extends downwards to form the connector end.

Further, the underside of the seat part has a through-hole which allows the seat end to pass through the through-hole under the base and then to extend above the base.

Compared with the prior art, the present invention has the following advantages and effects: The ISOFIX anti-return mechanism of the invention solves the problem that the ISOFIX connector retracts when the base is installed, and at the same time, makes it possible for the ISOFIX connector to retract after that the ISOFIX connector is connected to a socket on car seat and the seat part is disposed on the base.

### Brief description of the Drawings

FIG. 1 illustrates schematically an exploded view of the partial structure of a preferred embodiment of the present invention, wherein the base is not completely shown;
FIG. 2 is a partial schematic view of a preferred embodiment of the present invention showing that the anti-return assembly unit limits the retraction of the ISOFIX connector.
FIG. 3 is a partial schematic view of a preferred embodiment of the present invention showing that the seat end passes through the through-hole to extend above the base.
FIG.4 is a partial sectional view of a preferred embodiment of the present invention showing that the anti-return assembly unit is in an anti-return position after that the ISOFIX connector is pulled out.
FIG. 5 is a partial sectional view of a preferred embodiment of the present invention showing that the seat part is disposed on the base and the anti-return assembly unit is in a non anti-return position.
FIG. 6 is a partial sectional view of a preferred embodiment of the present invention showing that the ISOFIX connector has finished retracting.

In the figures: 1. base; 10. through-hole; 2. seat part; 3. ISOFIX connector; 30. guide rail; 31. connector end; 32. shift rod; 33. belt pressing rod; 4. anti-return assembly unit; 41. anti-return rotating block; 410. anti-return rod mounting slot; 42. anti-return rod; 43. rotating shaft; 401. seat end; 402. connector end; 403. elastic element; 5. belt.

### Detailed Description

The present invention will be further described in detail with reference to the accompanying drawings and embodiments. It should be noted that, if technically compatible, a new embodiment may be formed by any combination between the embodiments or between the technical features described below.

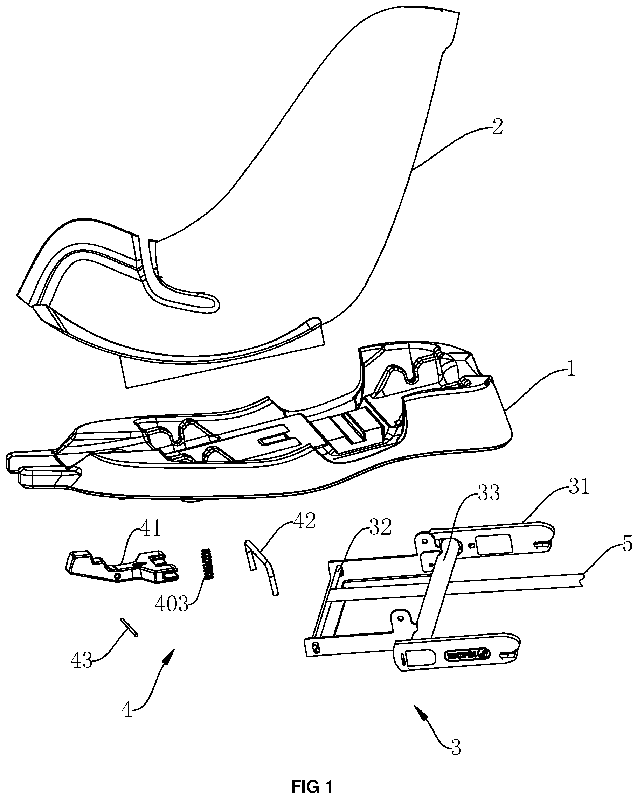

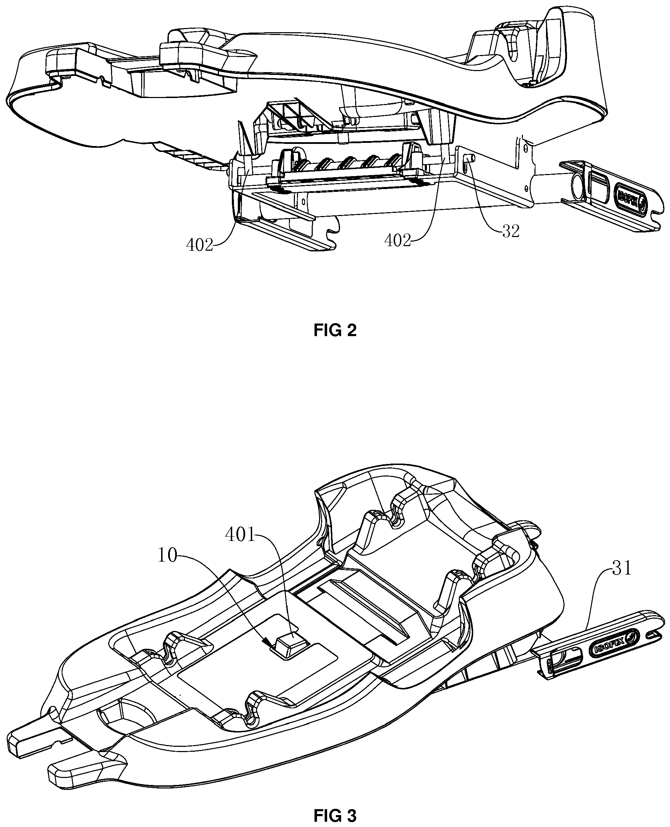

Referring to FIG.1 to FIG.6, a child safety chair of the invention comprises a base 1, a seat part 2, an ISOFIX connector 3 and an anti-return assembly unit 4. The base 1 and the seat part 2 are separably connected, the ISOFIX connector 3 is slidably disposed on the base 1, and the anti-return assembly unit 4 is rotatably mounted in the base 1. The anti-return assembly unit 4 rotates between an anti-return position and a non anti-return position. When the anti-return assembly unit 4 is in an anti-return position, one end thereof rests against the back end of the ISOFIX connector 3, which limits the retraction of the ISOFIX connector 3; when the anti-return assembly unit 4 is in a non anti-return position, it is separated from the ISOFIX connector 3, and does not anymore limit the retraction of the ISOFIX connector 3.

It should be noted that, in Figures 1-6, the complete base 1 is not shown, while only the portion in which the base 1 is engaged with the anti-return assembly unit 4 is shown. The separable connection between the base 1 and the seat part 2 and the sliding connection between the base 1 and the ISOFIX connector 3 belongs to the prior art, thereby is not described in detail in the present invention.

The anti-return assembly unit 4 comprises a seat end 401 and a connector end 402. An elastic element 403 is mounted between the anti-return assembly unit 4 and the base 1. The seat end 401 extends towards the seat part 2, and the connector end 402 extends towards the ISOFIX connector 3. When the seat part 2 is mounted on the base 1, the seat end 401 is pressed to move downwards, the connector end 402 rotates upwards away from the ISOFIX connector 3, and the anti-return assembly unit 4 rotates to a non anti-return position. When the seat part 2 is separated from the base 1, the anti-return assembly unit 4 is reset by the action of the elastic element 403, and rotates to the anti-return position. The connector end 402 is at the back end of the ISOFIX connector 3, which thereby limits the retraction of the ISOFIX connector 3.

A through-hole 10 is formed in underside of the base 1 to allow the seat end 401 to pass through the through-hole 10 under the base 1 and to extend above the base 1, so that when the seat part 2 is connected to the base 1, the seat end 401 is pressed and moves into the through-hole 10, and meanwhile the anti-return assembly unit 4 rotates to the non anti-return position; when the seat part 2 is separated from the base 1, the anti-return assembly unit 4 is activated to rotate by the elastic element 403, and the seat end 401 moves up to the outside of the through-hole 10.

The front end of the ISOFIX connector 3 is the connector end 31 which is adapted to be connected to interfaces on car. The side wall of the back end of the ISOFIX connector 3 has a vertical guide rail 30, and a shift rod 32 is movably disposed in the guide rail 30. The shift rod 32 is held at upper end of the guide rail 30 by an elastic element (not shown in the figures).

The shift rod 32 is connected to a belt 5. The belt 5 is used to pull the ISOFIX connector 3 out of the base 1; in the process of the belt 5 pulling out, the shift rod 32 moves to the lower end of the guide rail 30, so that the shift rod 32 is away from the connector end 402, and meanwhile the anti-return assembly unit 4 does not affect the process of pulling out the ISOFIX connector 3; when the ISOFIX connector 3 is pulled out, the belt 5 is no longer subjected to any external force, and the shift rod 32 is reset by the elastic element and moves upward to the upper end of the guide rail 30. At this point, the connector end 402 of the anti-return assembly unit 4 is at the back side of the shift rod 32, so that the ISOFIX connector 3 cannot retract.

It should be noted that, in order to ensure that when the belt 5 is subjected to an external force, a force in downward and outward direction is applied on the shift rod 32, a belt pressing rod 33 is further disposed outside the shift rod 32, and the belt 5 passes through under the belt pressing rod 33, so that the belt 5 is lower at position of the belt pressing rod 33 than at position of the shift rod 32, therefore, when the other end of the belt 5 is subjected to a pulling force, a force in downward direction is applied to the end of the belt 5 connected to the shift rod 32, which makes the shift rod 32 move down along the guide rail 30 while the ISOFIX connector 3 is being pulled out.

Further, the anti-return assembly unit 4 comprises an anti-return rotating block 41 and an anti-return rod 42. The anti-return rotating block 41 is rotatably mounted on the underside of the base 1 by a rotating shaft 43. One end of the anti-return rotating block 41 is the seat end 401 and the other end forms an anti-return rod mounting slot 411. The anti-return rod 42 is a U-shaped rod, the middle portion of the anti-return rod 42 is rotatably disposed in the anti-return rod mounting slot 411, and two ends of the anti-return rod 42 extends downwards, namely the connector end (402).

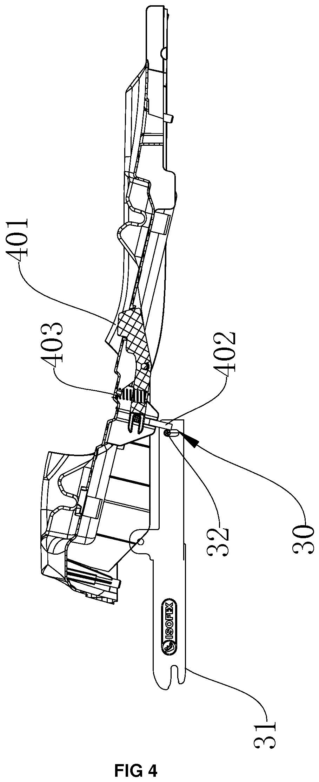

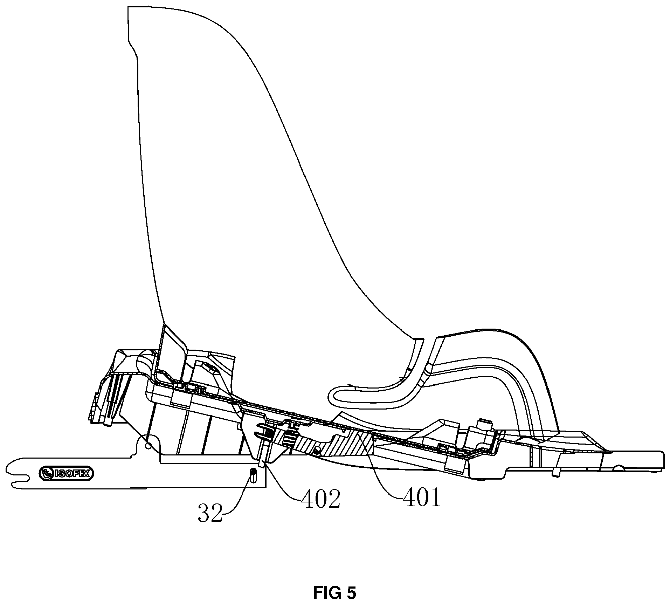

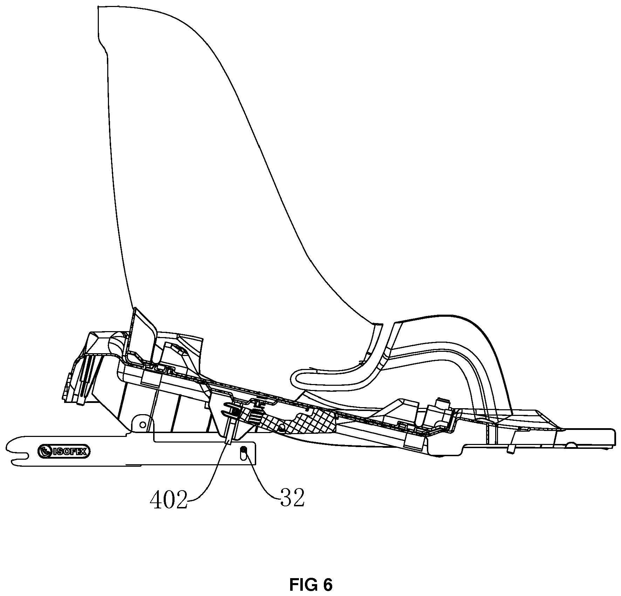

The child safety chair installation procedure of the present invention is as follows:
(1) First, the ISOFIX connector 3 is pulled out from under the base 1 by the belt 5, after that, the belt 5 is not subjected to any force, and the shift rod 32 is reset by the elastic element, moving up to the front of the connector end 402, and at this point, the position of the shift rod 32 is limited by the connector end 402, and the ISOFIX connector 3 cannot retract, being in a locked state, as shown in FIG. 4;
(2) The connector end 31 of the ISOFIX connector 3 is connected to an interface on car seat;
(3) The seat part 2 is disposed on the base 1, the underside of the seat part 2 presses against the seat end 401, the seat end 401 moves downwards, and the connector end 402 moves upwards, so that the connector end 402 is separated from the shift rod 32 and the ISOFIX connector 3 is in an unlocked state, as shown in FIG. 5;
(4) The seat part 2 and the base 1 are pushed backwards until the back of the seat part 2 is in close contract with the backrest of the car seat, namely, the ISOFIX connector 3 has finished retracting, as shown in FIG. 6.

The present invention makes use of the self-weight of the seat part 2 during installation to realize the locking or unlocking of the ISOFIX connector by the anti-return assembly unit 4, which not only cooperates with the installation method of the child safety chair, but also solves the problem that the ISOFIX connector retracts when being connected to interface on car.

The foregoing descriptions are merely preferred exemplary embodiments of the present invention, but not intended to limit the present invention in any form. Any changes and modifications made by the technicians skilled in the art without departing from the technical solution of the present invention will fall within the scope of the protection of the present invention, which is defined by the appended claims.

## Claims

1. Safety chair with an ISOFIX anti-return mechanism, comprising a base (1), a seat part (2) and an ISOFIX connector (3), wherein the base (1) and the seat part (2) are separably connected, the ISOFIX connector (3) is slidably disposed on the base (1), **characterized in that** the safety chair further comprises an anti-return assembly unit (4) which is rotatably mounted in the base (1), an elastic element (403) mounted between the anti-return assembly unit (4) and the base (1), one end of the anti-return assembly unit (4) extends towards the seat part (2) to form a seat end (401) and the other end extends towards the ISOFIX connector (3) to form a connector end (31), so as to make the anti-return assembly unit (4) rotate between an anti-return position and a non anti-return position by means of the self-weight of the seat part (2) and the effect of the elastic element (403), when the anti-return assembly unit (4) rotates to the anti-return position, the connector end (31) rests against back end of the ISOFIX connector which thus cannot retract;
a front end of the ISOFIX connector (3) is adapted to connect to a socket of car seat, the back end of the ISOFIX connector (3) is provided with a shift rod (32) which can move up and down, the shift rod (32) is held in an upper position by the elastic element (403), so that the connector end (31) of the anti-return assembly unit (4) can rest against a back end of the shift rod (32) after that the ISOFIX connector (3) is pulled out from the base (1), the safety chair further comprising a belt (5), one end of the belt (5) connected to the shift rod (32), the other end extending outside the base (1).

2. Safety chair according to claim 1, **characterized in that** the ISOFIX connector (3) is provided with a belt pressing rod (33) in front of the shift rod (32), the belt (5) is adapted to pass through under the belt pressing rod (33) to extend outside the base (1), so that the belt (5) is lower at position of the belt pressing rod (33) than at position of the shift rod (32).

3. Safety chair according to claim 1, **characterized in that** two sides of the back end of the ISOFIX connector (3) respectively comprises a guide rail (30), two ends of the shift rod (32) are movably disposed in the guide rail (30), the shift rod (32) is held at upper end of the guide rail (30) by the elastic element (403).

4. Safety chair according to any one of claims 1 to 3, **characterized in that** the anti-return assembly unit (4) comprises an anti-return rotating block (41) and an anti-return rod (42), the anti-return rotating block (41) rotatably mounted on the underside of the base (1) by a rotating shaft (43), one end of the anti-return rotating block (41) extends towards the seat part (2) to form a seat end (401), the other end of the anti-return rotating block (41) forming an anti-return rod mounting slot (410), the anti-return rod (42) is a U-shaped rod, the middle portion of the anti-return rod (42) rotatably disposed in the anti-return rod mounting slot (410), two ends of the anti-return rod (42) extend downwards to form the connector end (402).

5. Safety chair according to claim 4, **characterized in that** underside of the seat part (2) has a through-hole (10) which allows the seat end (401) to pass through the through-hole (10) under the base (1) and then to extend above the base (1).

## Patentansprüche

1. Sicherheitssitz mit einem ISOFIX-Anti-Rücklaufmechanismus, der eine Basis (1), einen Sitzteil (2) und einen ISOFIX-Verbinder (3) umfasst, wobei die Basis (1) und der Sitzteil (2) trennbar verbunden sind, der ISOFIX-Verbinder (3) verschiebbar an der Basis (1) angeordnet ist, **dadurch gekennzeichnet, dass** der Sicherheitssitz weiter eine Anti-Rücklauf-Baugruppeneinheit (4) umfasst, die drehbar in der Basis (1) montiert ist, ein elastisches Element (403), das zwischen der Anti-Rücklauf-Baugruppeneinheit (4) und der Basis (1) montiert ist, sich ein Ende der Anti-Rücklauf-Baugruppeneinheit (4) zum Sitzteil (2) hin erstreckt, um ein Sitzende (401) zu bilden, und sich das andere Ende zum ISOFIX-Verbinder (3) hin erstreckt, um ein Verbinderende (31) zu bilden, um die Anti-Rücklauf-Baugruppeneinheit (4) mittels des Eigengewichts des Sitzteils (2) und der Wirkung des elastischen Elements (403) zwischen einer Anti-Rücklauf-Position und einer Nicht-Anti-Rücklauf-Position drehen zu lassen, wenn die Anti-Rücklauf-Baugruppeneinheit (4) zur Anti-Rücklauf-Position dreht, das Verbinderende (31) am hinteren Ende des ISOFIX-Verbinders ruht, der damit nicht einfahren kann;
ein vorderes Ende des ISOFIX-Verbinders (3) dazu geeignet ist, sich mit einem Autositz-Sockel zu verbinden, das hintere Ende des ISOFIX-Verbinders (3) mit einer Schaltstange (32) versehen ist, die sich auf und ab bewegen kann, die Schaltstange (32) vom elastischen Element (403) in einer oberen Position gehalten wird, sodass das Verbinderende (31) der Anti-Rücklauf-Baugruppeneinheit (4) an einem hinteren Ende der Schaltstange (32) ruhen kann, nachdem der ISOFIX-Verbinder (3) aus der Basis (1) herausgezogen wird, wobei der Sicherheitssitz weiter einen Gurt (5) umfasst, ein Ende des Gurts (5) mit der Schaltstange (32) verbunden, das andere Ende sich außerhalb der Basis (1) erstreckend.

2. Sicherheitssitz nach Anspruch 1, **dadurch gekennzeichnet, dass** der ISOFIX-Verbinder (3) mit einer Gurtdruckstange (33) vor der Schaltstange (32) versehen ist, der Gurt (5) dazu geeignet ist, unter der Gurtdruckstange (33) hindurch zu verlaufen, um sich außerhalb der Basis (1) zu erstrecken, sodass der Gurt (5) an der Position der Gurtdruckstange (33) tiefer liegt als an der Position der Schaltstange (32).

3. Sicherheitssitz nach Anspruch 1, **dadurch gekennzeichnet, dass** zwei Seiten des hinteren Endes des ISOFIX-Verbinders (3) jeweils eine Führungsschiene (30) umfassen, zwei Enden der Schaltstange (32) beweglich in der Führungsschiene (30) angeordnet sind, die Schaltstange (32) am oberen Ende der Führungsschiene (30) vom elastischen Element (403) gehalten wird.

4. Sicherheitssitz nach einem der Ansprüche 1 bis 3, **dadurch gekennzeichnet, dass** die Anti-Rücklauf-Baugruppeneinheit (4) einen Anti-Rücklauf-Drehblock (41) und eine Anti-Rücklauf-Stange (42) umfasst, der Anti-Rücklauf-Drehblock (41) durch eine Drehwelle (43) drehbar an der Unterseite der Basis (1) montiert, sich ein Ende des Anti-Rücklauf-Drehblocks (41) zum Sitzteil (2) hin erstreckt, um ein Sitzende (401) zu bilden, wobei das andere Ende des Anti-Rücklauf-Drehblocks (41) einen Anti-Rücklauf-Stangen-Montageschlitz (410) bildet, die Anti-Rücklauf-Stange (42) eine U-förmige Stange ist, der mittlere Abschnitt der Anti-Rücklauf-Stange (42) drehbar im Anti-Rücklauf-Stangen-Montageschlitz (410) angeordnet, zwei Enden der Anti-Rücklauf-Stange (42) sich nach unten erstrecken, um das Verbinderende (402) zu bilden.

5. Sicherheitssitz nach Anspruch 4, **dadurch gekennzeichnet, dass** die Unterseite des Sitzteils (2) ein Durchgangsloch (10) aufweist, das es dem Sitzende (401) ermöglicht, durch das Durchgangsloch (10) unter die Basis (1) hindurch zu verlaufen und sich dann oberhalb der Basis (1) zu erstrecken.

## Revendications

1. Siège de sécurité avec un mécanisme anti-retour ISOFIX, comprenant une base (1), une partie de siège (2) et un raccord ISOFIX (3), dans lequel la base (1) et la partie de siège (2) sont raccordées de manière séparable, le raccord ISOFIX (3) est disposé de manière coulissante sur la base (1), **caractérisé en ce que** le siège de sécurité comprend en outre une unité d'ensemble anti-retour (4) qui est montée de manière rotative dans la base (1), un élément élastique (403) monté entre l'unité d'ensemble anti-retour (4) et la base (1), une extrémité de l'unité d'ensemble anti-retour (4) s'étend vers la partie de siège (2) pour former une extrémité de siège (401) et l'autre extrémité s'étend vers le raccord ISOFIX (3) pour former une extrémité de raccord (31), de façon à faire tourner l'unité d'ensemble anti-retour (4) entre une position anti-retour et une position non anti-retour au moyen du poids propre de la partie de siège (2) et de l'effet de l'élément élastique (403), lorsque l'unité d'ensemble anti-retour (4) tourne jusqu'à la position anti-retour, l'extrémité de raccord (31) repose contre une extrémité arrière du raccord ISOFIX qui, ainsi, ne peut pas se rétracter ;
une extrémité avant du raccord ISOFIX (3) est adaptée pour se raccorder à un emboîtement d'un siège auto, l'extrémité arrière du raccord ISOFIX (3) est munie d'une tringle (32) qui peut se déplacer vers le haut et vers le bas, la tringle (32) est maintenue dans une position supérieure par l'élément élastique (403), de telle sorte que l'extrémité de raccord (31) de l'unité d'ensemble anti-retour (4) peut reposer contre une extrémité arrière de la tringle (32) après traction du raccord ISOFIX (3) depuis la base (1), le siège de sécurité comprenant en outre une courroie (5), une extrémité de la courroie (5) étant raccordée à la tringle (32), l'autre extrémité s'étendant à l'extérieur de la base (1).

2. Siège de sécurité selon la revendication 1, **caractérisé en ce que** le raccord ISOFIX (3) est muni d'une tige de pression de courroie (33) devant la tringle (32), la courroie (5) est adaptée pour traverser sous la tige de pression de courroie (33) pour s'étendre à l'extérieur de la base (1), de telle sorte que la courroie (5) est plus basse à la position de la tige de pression de courroie (33) qu'à la position de la tringle (32).

3. Siège de sécurité selon la revendication 1, **caractérisé en ce que** deux côtés de l'extrémité arrière du raccord ISOFIX (3) comprennent respectivement un rail de guidage (30), deux extrémités de la tringle (32) sont disposées de manière mobile dans le rail de guidage (30), la tringle (32) est maintenue au niveau d'une extrémité supérieure du rail de guidage (30) par l'élément élastique (403).

4. Siège de sécurité selon l'une quelconque des revendications 1 à 3, **caractérisé en ce que** l'unité d'ensemble anti-retour (4) comprend un bloc rotatif anti-retour (41) et une tige anti-retour (42), le bloc rotatif anti-retour (41) étant monté de manière rotative sur le côté de dessous de la base (1) par un arbre rotatif (43), une extrémité du bloc rotatif anti-retour (41) s'étend vers la partie de siège (2) pour former une extrémité de siège (401), l'autre extrémité du bloc rotatif anti-retour (41) formant une fente de montage de tige anti-retour (410), la tige anti-retour (42) est une tige en forme de U, la portion médiane de la tige anti-retour (42) est disposée de manière rotative dans la fente de montage de tige anti-retour (410), deux extrémités de la tige anti-retour (42) s'étendent vers le bas pour former l'extrémité de raccord (402).

5. Siège de sécurité selon la revendication 4, **caractérisé en ce que** le côté de dessous de la partie de siège (2) possède un trou traversant (10) qui permet à l'extrémité de siège (401) de traverser le trou traversant (10) sous la base (1), puis de s'étendre au-dessus de la base (1).
